# EUROPÄISCHE PATENTSCHRIFT

(11) **EP 1 895 277 B1**
(45) Veröffentlichungstag und Bekanntmachung des Hinweises auf die Patenterteilung: **06.05.2009**
(21) Anmeldenummer: 06018418.1
(22) Anmeldetag: 04.09.2006
(51) Int. Cl.: G01D 5/347

(54) **Rotary encoder with mounting aid**
Winkelkodierer mit Montagehilfe
Codeur rotatif avec aide de montage

(43) Veröffentlichungstag der Anmeldung: 05.03.2008
(73) Patentinhaber: SICK STEGMANN GmbH, 78166 Donaueschingen (DE)
(72) Erfinder: Siraky, Josef, 78166 Donaueschingen (DE); Hartlieb, Rolf, 78050 VS-Villingen (DE)
(74) Vertreter: Patentanwälte Westphal, Mussgnug & Partner

(56) Entgegenhaltungen:
- DE-A1- 4 304 914
- DE-A1- 10 310 369
- DE-A1- 19 645 605
- DE-A1- 19 836 003

## Beschreibung

Die Erfindung betrifft einen Encoder zur Erfassung von Messwerten, die vom Drehwinkel zwischen einer Welle und einem die welle aufnehmenden Gehäuse abhängen, gemäß dem Oberbegriff des Anspruchs 1.

Encoder dieser Gattung dienen zur inkrementalen oder absoluten Messung des Drehwinkels, der Winkelgeschwindigkeit, der winkelbeschleunigung oder dergleichen von gegeneinander verdrehbaren Objekten. Die häufigste Verwendung ist die Messung der Drehbewegung einer Welle in einem die Welle aufnehmenden Gehäuse, z. B. die Messung der Motorwelle eines Elektromotors. Der Encoder weist einen Rotor und einen Stator auf. Der Stator wird an dem Gehäuse drehfest montiert, während der Rotor drehfest mit der Welle verbunden wird. Eine Abtastung erfasst die Drehung des Rotors gegenüber dem Stator, wozu es notwendig ist, dass der Rotor in Bezug auf den Stator, der in der Regel die Abtastung trägt, axial und radial mit ausreichender Genauigkeit umläuft.

Es sind Encoder bekannt, bei welchen hierzu der Rotor über Wälzlager in dem Stator gelagert ist. Hierdurch ist eine präzise Rotation des Rotors in Bezug auf den Stator gewährleistet. Es ist allerdings in der Regel erforderlich, dass der Stator an dem Gehäuse oder der Rotor an der Welle elastisch befestigt wird, um axiale und radiale Toleranzen in der Lagerung der welle gegenüber dem Gehäuse auszugleichen. Die Lagerung des Rotors in dem Stator und die elastische Montage des Rotors bzw. Stators an den Messobjekten ist mit einem konstruktiven Aufwand verbunden.

Es sind weiter Encoder der eingangs genannten Gattung bekannt, die dadurch kostengünstig sind, dass der Rotor nicht über mechanische wälzlager in dem Stator gelagert ist. Der Stator wird unmittelbar an dem Gehäuse fixiert, während der Rotor unmittelbar auf der Welle sitzt. Eventuelle Lauffehler der Welle gegenüber dem Gehäuse bewirken dabei entsprechende Lauffehler des Rotors in dem Stator, sodass der Rotor insbesondere mit einer gewissen axialen Toleranz gegenüber dem Stator umlaufen muss. In einem typischen Beispiel ist der Rotor als rotierende Scheibe ausgebildet, die sich in einem axialen Abstand von einigen zehntel Millimetern gegenüber einer fest stehenden Scheibe des Stators dreht, wobei die Scheibe des Rotors eine inkrementale oder absolut kodierte Maßverkörperung trägt, die durch eine an der Scheibe des Stators angeordnete Abtastung abgetastet wird. Die Maßverkörperung und die Abtastung können optisch, magnetisch oder elektrisch-induktiv ausgebildet sein.

Da der Rotor nicht mechanisch in dem Stator gelagert ist, muss die Positionierung des Rotors in dem Stator bei der Montage des Encoders durchgeführt werden. Hierzu ist es bekannt, den Stator zunächst mit Hilfe von Montagemitteln in eine erste Hilfsposition zu bringen, in welcher der Stator einen definierten axialen Abstand von der Anbaufläche des Gehäuses aufweist, wobei dieser axiale Abstand dem vorgesehenen axialen Abstand von Stator und Rotor im endgültig montierten Zustand entspricht. Die Montagemittel bestehen aus einem Werkzeug, welches als flache Gabel zwischen die Anbaufläche des Gehäuses und den Stator eingesetzt wird und den Abstand zwischen diesen Teilen festlegt. Dann wird der Rotor auf der Welle axial so positioniert, dass er an der zugeordneten Statorfläche axial anliegt. In dieser Position wird der Rotor auf der Welle fixiert. Anschließend wird das gabelförmige Werkzeug zwischen dem Stator und dem Gehäuse seitlich herausgezogen. Der Stator wird nun um den vorgegebenen axialen Abstand vollständig gegen das Gehäuse bewegt und an diesem fixiert. Dadurch ergibt sich der erforderliche axiale Abstand zwischen dem Rotor und dem Stator, der für die berührungsfreie Drehung des Rotors mit der notwendigen axialen Toleranz vorgesehen ist.

Bei diesem bekannten Encoder erfordert die Montage ein zusätzliches Werkzeug als Montagemittel. Dieses Werkzeug wird von außen radial zwischen die Anbaufläche des Gehäuses und den Stator des Encoders eingeschoben, was in bestimmten Einbausituationen des Encoders räumlich schwierig ist.

Ähnliche, gattungsgemässe Verfahren zur Montage eines Encoders sind aus z.B. aus DE 196 45 605 A1 und DE 198 36 003 A1 bekannt.

Der Erfindung liegt daher die Aufgabe zugrunde, bei einem Encoder der eingangs genannten Gattung die Montage zu erleichtern.

Diese Aufgabe wird erfindungsgemäß gelöst durch einen Encoder mit den Merkmalen des Patentanspruchs 1.

Vorteilhafte Ausführungen der Erfindung sind in den Unteransprüchen angegeben.

Erfindungsgemäß wird als Montagemittel ein Abstandshalter verwendet, der zunächst den Stator des Encoders in einer ersten Hilfsposition in dem vorbestimmten axialen Abstand von dem Gehäuse hält. In dieser ersten Hilfsposition wird der Rotor auf der Welle zur Anlage an dem Stator gebracht und auf der Welle fixiert. Anschließend wird der Stator unter Verformung des Abstandshalters an das Gehäuse gedrückt und an dem Gehäuse fixiert. Der Abstandshalter ist vorzugsweise an dem Encoder angebracht und verbleibt im montierten Zustand an dem Encoder. Es ist somit kein zusätzliches Werkzeug für die Montage erforderlich und es ist seitlich des zu montierenden Encoders kein Freiraum für den Einsatz eines solchen Werkzeuges notwendig.

Vorzugsweise ist der Abstandshalter als Federeinrichtung ausgebildet, die elastisch verformt wird.

In einer einfachen Ausführung ist die Federeinrichtung als Federring ausgebildet, der auf dem Außenumfang des Stators sitzt und mit Stützpunkten axial über die dem Gehäuse zugewandte Stirnfläche des Stators hinausragt und sich mit diesen Stützpunkten an der Anbaufläche des Gehäuses abstützt. Dadurch wird der Stator in der Hilfsposition in der vorgegebenen axialen Distanz von dem Gehäuse gehalten. Nach dem Positionieren und Fixieren des Rotors muss der Stator lediglich gegen das Gehäuse gedrückt und an diesem fixiert werden. Die Stützpunkte des Federringes werden dabei axial nach hinten gedrückt, sodass sie sich hinter der Stirnfläche des Stators an dessen Außenumfang befinden. Der Federring ist vorzugsweise als kostengünstiges Kunststoffteil ausgebildet.

Im Folgenden wird die Erfindung anhand eines in der Zeichnung dargestellten Ausführungsbeispieles näher erläutert. Es zeigen
- Fig. 1: einen Axialschnitt durch den Encoder in der Hilfsposition während der Montage,
- Fig. 1a: einen vergrößerten Ausschnitt aus Fig. 1,
- Fig. 2: einen Fig. 1 entsprechenden Axialschnitt in der Montageposition,
- Fig. 2a: einen entsprechenden vergrößerten Ausschnitt aus Fig. 2 und
- Fig. 3: eine perspektivische Ansicht des Encoders.

In dem Ausführungsbeispiel ist dargestellt, wie der Encoder an einem Elektromotor montiert wird, um die Drehbewegung der Motorwelle zu erfassen. Von dem Motor ist ein Ausschnitt des Gehäuses 10 und die aus dem Gehäuse 10 herausragende Welle 12 gezeigt. In der Anbaufläche des Gehäuses 10 ist konzentrisch um die welle 12 eine kreisscheibenförmige vertiefte Aufnahme 14 ausgebildet, in welche der Encoder eingesetzt wird. Außen um die Aufnahme 14 sind im Winkel um 120° gegeneinander versetzt drei Klammern 16 angebracht, die jeweils eine nach innen über die Aufnahme 14 schwenkbare Nase 18 aufweisen.

Der Encoder weist einen Stator 20 auf, der koaxial auf die Welle 12 aufgeschoben wird, wobei die Welle 12 frei drehbar durch den Stator 20 durchtritt. Der Stator 20 weist ein zylindrisches Gehäuse mit einem Unterteil 22 und einem Deckel 24 auf. In dem Unterteil 22 sitzt eine untere Leiterplatte 26, die den Boden des Unterteils 22 im Wesentlichen bedeckt und axial beabstandet über dieser unteren Leiterplatte 26 eine obere Leiterplatte 28. Die Leiterplatten 26 und 28 sind fest in dem Unterteil 22 des Stators 20 angebracht.

Weiter weist der Encoder einen Rotor 30 auf, der als Scheibe ausgebildet ist und konzentrisch auf einer Buchse 32 sitzt. Die Scheibe des Rotors 30 befindet sich axial zwischen der unteren Leiterplatte 26 und der oberen Leiterplatte 28 und ist zu diesen planparallel ausgebildet. Die Buchse 32 mit dem Rotor 30 kann sich frei in dem Stator drehen. Die Buchse 32 ragt axial über den Deckel 24 des Stators 20 nach außen und ist in ihrem über den Deckel 24 ragenden Ende axial geschlitzt als Spannzange 34 ausgebildet. Auf diesem als Spannzange 34 ausgebildeten, über den Deckel 24 ragenden Ende sitzt ein Spannring 36. Der Innendurchmesser der Buchse 32 entspricht dem Durchmesser der Welle 12, sodass der Rotor 30 mit der Buchse 32 auf die Welle 12 axial aufgeschoben werden kann und durch Anziehen des Spannringes 36 mittels der Spannzange 34 auf der Welle 12 fixiert werden kann.

Das Unterteil 22 des Stators 20 hat die Form eines zylindrischen Topfes. An der unteren Bodenseite des Unterteils 22 weist dieses einen Außendurchmesser auf, der dem Innendurchmesser der Aufnahme 14 entspricht, sodass das Unterteil 22 in die Aufnahme 14 zentriert zur Welle 12 eingesetzt werden kann. Axial beabstandet von der unteren Bodenfläche des Unterteils 22 erweitert sich dessen Außenumfang in Form eines Bundes 38 mit einem Außendurchmesser, der größer ist als der Innendurchmesser der Aufnahme 14. Oberhalb des Bundes 38 ist der Außendurchmesser des Unterteils 22 wieder kleiner. Der oben auf das Unterteil 22 aufgesetzte und fixierte Deckel 24 übergreift den oberen Rand des Unterteils 22 außen. Dadurch wird zwischen der Unterkante des Deckels 24 und dem oberen Rand des Bundes 38 eine auf dem Außenumfang des Unterteils 22 umlaufende Umfangsnut 40 gebildet.

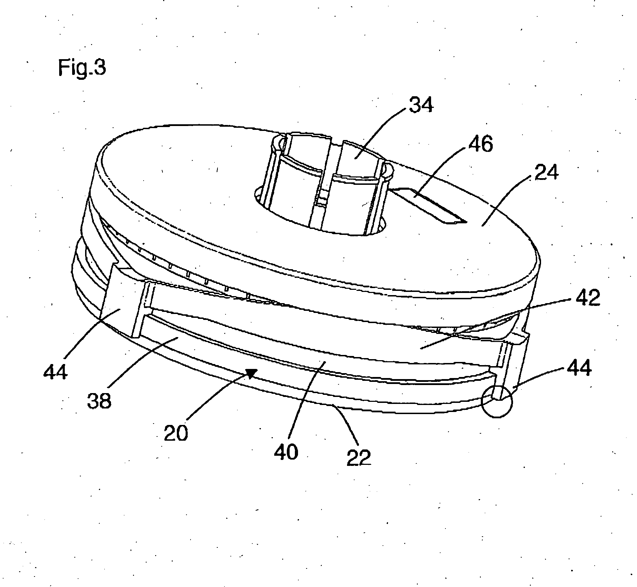

In diese Umfangsnut 40 ist ein Federring 42 aus Kunststoff eingesetzt. Der Federring 42 liegt als geschlossen umlaufender Ring in der Umfangsnut 40, wozu der Federring 42 vor dem Aufsetzen des Deckels 24 von oben auf das Unterteil 22 aufgeschoben wird. Wie am besten in Fig. 3 zu sehen ist, weist der Federring 42 eine axiale Breite auf, die kleiner ist als die axiale Breite der Umfangsnut 40. Der Federring 42 verläuft in Umfangsrichtung in einer Wellenlinie in der Weise, dass der Federring 42 an drei jeweils um 120° gegeneinander versetzten Stellen mit seiner Oberkante an der Unterkante des Deckels 24 anliegt. Jeweils in Umfangsrichtung mittig zwischen diesen an dem Deckel 24 anliegenden Punkten liegt der Federring 42 mit seiner Unterkante an der Oberkante des Bundes 38 an. An diesen unteren an dem Bund 38 anliegenden Punkten ist an dem Federring 42 jeweils ein Stützpunkt 44 angeformt, der in Form eines axial verlaufenden Lappens den Bund 38 am Außenumfang übergreift und axial über die Unterkante des Bundes 38 übersteht.

Der Rotor 30 trägt in an sich bekannter Weise eine inkrementale oder absolut kodierte Maßverkörperung. Die untere Leiterplatte 26 und die obere Leiterplatte 28 tragen eine Abtastung für diese Maßverkörperung und die zugehörige Elektronik. Die Anschlüsse für die Elektronik sind über einen Steckverbinder 46 an der Oberseite des Deckels 24 nach außen geführt. Die Maßverkörperung und die Abtastung kann in an sich bekannter Weise optisch, magnetisch oder induktiv ausgebildet sein.

Beim Zusammenbau des Encoders wird zunächst die untere Leiterplatte 26 in das Unterteil 22 des Stators 20 eingesetzt. Dann wird der Rotor 30 mit seiner Buchse 32 eingesetzt und anschließend wird die obere Leiterplatte 28 in das Unterteil eingesetzt. Der Rotor 30 ist dabei axial frei zwischen der unteren Leiterplatte 26 und der oberen Leiterplatte 28 beweglich. Anschließend wird der Federring 42 außen auf das Unterteil 22 aufgeschoben und abschließend wird der Deckel 24 auf dem Unterteil 22 fixiert.

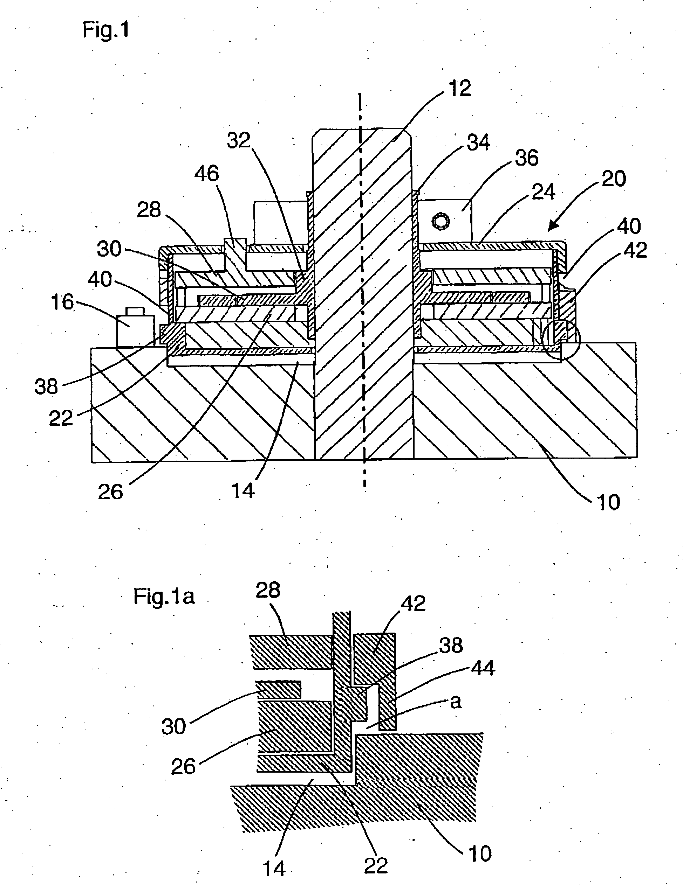

Zur Montage des Encoders an dem Elektromotor wird der Encoder auf die Welle 12 aufgeschoben. Dabei gleitet die Buchse 32 des Rotors 30 auf der Welle 12, während der Stator 20 gegenüber dem Rotor 30 axial frei beweglich ist. Der Encoder wird auf der Welle 12 gegen das Gehäuse 10 geschoben, bis das Unterteil 22 mit seinem Boden in die Aufnahme 14 eingreift und der Federring 42 mit seinen Stützpunkten 44 außerhalb der Aufnahme 14 auf dem Gehäuse 10 zur Anlage kommt. Diese Situation ist in den Figuren 1 und 1a gezeigt. Da sich der Federring 42 einerseits mit seinen Stützpunkten 44 an dem Gehäuse 10 abstützt und andererseits mit seinen oberen Randpunkten an dem Deckel 24 abstützt, hält der Federring 42 den Stator 20 in einer axial definierten Hilfsposition in Bezug auf das Gehäuse 10. Da die Stützpunkte 44 den Bund 38 axial überragen, wird in dieser Hilfsposition zwischen dem Gehäuse 10 und der Unterkante des Bundes 38 ein definierter axialer Abstand a festgelegt.

Wenn der Stator 20 durch den Federring 42, der in diesem Zustand spannungsfrei ist, in dieser Hilfsposition gehalten ist, wird der Rotor 30 mit seiner Buchse 32 auf der Welle 12 so weit nach unten verschoben, bis der Rotor 30 auf der Oberfläche der unteren Leiterplatte 26 axial aufliegt, wie dies in den Figuren 1 und 1a gezeigt ist. In dieser Position wird der Spannring 36 angezogen, sodass der Rotor 30 in dieser axialen Position auf der Welle 12 axial und drehfest fixiert ist.

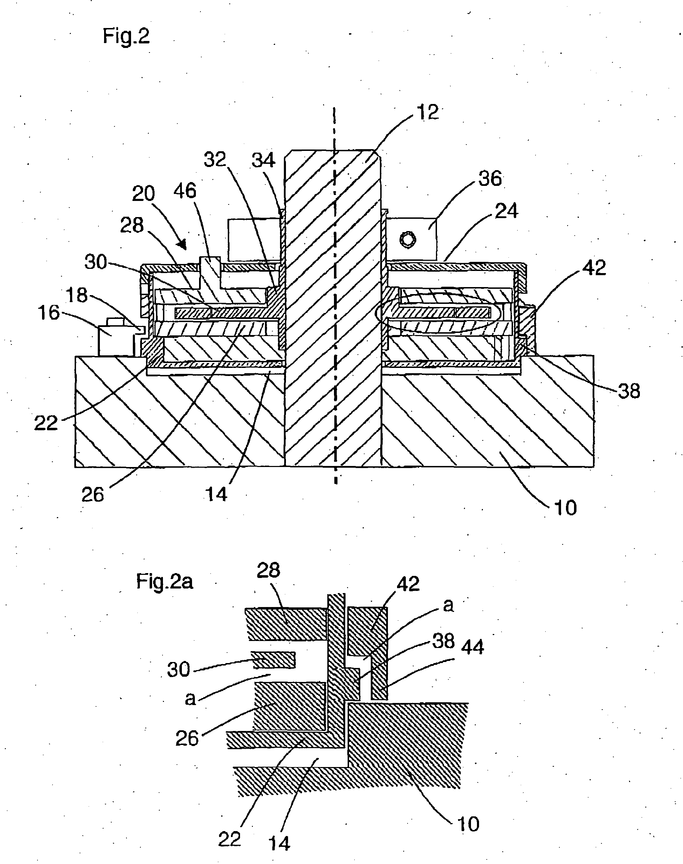

Anschließend wird der Stator 20 gegen die Federkraft des elastischen Federringes 42 nach unten gegen das Gehäuse 10 gedrückt, bis der Bund 38 mit seiner Unterkante an dem Gehäuse 10 anliegt, wie dies in den Figuren 2 und 2a zu sehen ist. Der Federring 42 wird dabei elastisch verformt, wobei die Stützpunkte 44 nach oben gedrückt werden, bis sie hinter die Unterkante des Bundes 38 gelangen. In dieser Montageposition, in welcher der Stator 20 mit seinem Bund 38 auf dem Gehäuse 10 aufsitzt, wird der Stator 20 an dem Gehäuse 10 fixiert, indem die Nasen 18 der Klammern 16 nach innen geschwenkt werden, sodass sie den Bund 38 axial übergreifen. Die Klammern 16 werden dann angezogen, sodass die Nasen 18 den Stator 20 mit seinem Bund 38 gegen das Gehäuse 10 pressen.

Damit ist der Montagevorgang beendet. Durch das Niederdrücken des Stators 20 um den axialen Abstand a wird die untere Leiterplatte 26 um diesen Abstand a von dem auf der Welle 12 fixierten Rotor 30 axial wegbewegt. Der Rotor 30 hat nun einen definierten axialen Abstand von der unteren Leiterplatte 26 und der oberen Leiterplatte 28, sodass er sich berührungsfrei in dem Stator 20 drehen kann, wobei der axiale Abstand zu der unteren Leiterplatte 26 und der oberen Leiterplatte 28 so gewählt ist, dass Bewegungstoleranzen der Welle 12 gegenüber dem Gehäuse 10 aufgenommen werden können. Der axiale Abstand a liegt im Allgemeinen in der Größenordnung von einigen zehntel Millimetern, bspw. bei 0,4 mm.

### Bezugszeichenliste

- 10: Gehäuse
- 12: Welle
- 14: Aufnahme
- 16: Klammern
- 18: Nase
- 20: Stator
- 22: Unterteil
- 24: Deckel
- 26: untere Leiterplatte
- 28: obere Leiterplatte
- 30: Rotor
- 32: Buchse
- 34: Spannzange
- 36: Spannring
- 38: Bund
- 40: Umfangsnut
- 42: Federring
- 44: Stützpunkt
- 46: Steckverbinder

- a: axialer Abstand

## Patentansprüche

1. Encoder zur Erfassung von Messwerten, die vom Drehwinkel zwischen einer Welle (12) und einem die Welle (12) aufnehmenden Gehäuse (10) abhängen, mit einem an dem Gehäuse (10) fixierbaren Stator (20), mit einem auf der Welle (12) fixierbaren Rotor (30), mit einer die Drehung des Rotors (30) gegen den Stator (20) erfassenden Abtastung und mit Montagemitteln, die den Stator (20) in einer Hilfsposition in einem definierten axialen Abstand (a) von dem Gehäuse (10) halten, der dem für ein berührungsfreies Drehen erforderlichen axialen Abstand von Rotor (30) und Stator (20) im montierten Zustand entspricht, und die das Fixieren des Stators (20) an dem Gehäuse (10) in einer Montageposition ermöglichen in der der Rotor einen definierten axialen Abstand (a) vom Stator besitzt, **dadurch gekennzeichnet, dass** die Montagemittel einen an dem Encoder angebrachten Abstandshalter, aufweisen, der den Stator (20) im spannungsfreien Zustand in der Hilftposition hält, dass der Stator (20) unter Verformung der Abstandshalters um einen definierten axialen Abstand (a) in die Montageposition zur Fixierung an dem Gehäuse (10) bewegbar ist und dass der verformte Abstandshalter bei montiertem Encoder in der Montageposition verbleibt.

2. Encoder nach Anspruch 1,
**dadurch gekennzeichnet, dass** der Abstandshalter eine Federeinrichtung ist und dass der Stator (20) gegen die Federkraft der Federeinrichtung in die Montageposition bewegbar ist.

3. Encoder nach Anspruch 2,
**dadurch gekennzeichnet, dass**
die Federeinrichtung den Stator (20) elastisch an dem Gehäuse (10) abstützt.

4. Encoder nach Anspruch 3,
**dadurch gekennzeichnet, dass**
die Federeinrichtung wenigstens eine an dem Stator (20) angeordnete Feder (42) aufweist, die sich an dem Gehäuse (10) abstützt.

5. Encoder nach Anspruch 4,
**dadurch gekennzeichnet, dass**
die Feder ein konzentrisch an dem Stator (20) angebrachter Federring (42) ist, der sich an über dem Umfang verteilten Stützpunkten (44) an dem Gehäuse (10) abstützt.

6. Encoder nach Anspruch 5,
**dadurch gekennzeichnet, dass**
drei im Winkel um 120° gegeneinander versetzte Stützpunkte (44) vorgesehen sind,

7. Encoder nach Anspruch 5 oder 6,
**dadurch gekennzeichnet, dass**
der Federring (42) auf dem Außenumfang des Stators (20) angebracht ist, im entspannten Zustand in der Hilfsposition mit den Stützpunkten (44) axial gegen das Gehäuse (10) über die Stirnseite des Stators (20) hinaus ragt und in der Montageposition gegen eine Federkraft axial hinter die Stirnfläche des Stators (20) gedrückt wird.

8. Encoder nach einem der Ansprüche 5 bis 7,
**dadurch gekennzeichnet, dass**
der Federring (42) in Umfangsrichtung wellenförmig ausgebildet ist und in Umfangsrichtung abwechselnd an dem Stator (20) abgestützt und mit Stützpunkten (44) ausgebildet ist.

9. Encoder nach einem der Ansprüche 5 bis 8,
**dadurch gekennzeichnet, dass** der Federring aus Kunststoff besteht.

## Claims

1. An encoder for recording measured values, which depend on the angle of rotation between a shaft (12) and a housing (10) containing the shaft (12), with a stator (20) that can be fixed to the housing (10), with a rotor (30) that can be fixed to the shaft (12), with a scanner that records the rotation of the rotor (30) relative to the stator (20), and with mounting means that hold the stator (20), in an initial auxiliary position, at a defined axial distance (a) from the housing (10), which distance (a) corresponds to the axial distance between the rotor (30) and the stator (20) that is required for non-contact rotation in the assembled condition, and which mounting means make it possible to attach the stator (20) to the housing (10) in a mounting position in which the rotor is a defined axial distance (a) from the stator,
**characterised in that** the mounting means comprise a spacer mounted on the encoder, which spacer holds the stator (20) in the stress-relieved condition in the auxiliary position, **in that** the stator (20) can move by deformation of the spacer by a defined axial distance (a) into the mounting position for fixing to the housing (10)
**and in that** the deformed spacer remains in the mounting position when the encoder is mounted.

2. An encoder according to Claim 1,
**characterised in that** the spacer is a spring mechanism
**and in that** the stator (20) can be moved against the spring tension of the spring mechanism into the mounting position.

3. An encoder according to Claim 2,
**characterised in that** the spring mechanism elastically braces the stator (20) against the housing (10).

4. An encoder according to Claim 3,
**characterised in that** the spring mechanism comprises at least one spring (42), which is disposed on the stator (20) and is braced against the housing (10).

5. An encoder according to Claim 4,
**characterised in that** the spring is an elastic ring (42), which is concentrically mounted on the stator (20) and is braced against the housing (10) at supporting points (44) distributed over the circumference.

6. An encoder according to Claim 5,
**characterised in that** three supporting points (44) are provided, which are spaced at an angle of 120° relative to each other. -

7. An encoder according to Claim 5 or 6,
**characterised in that** the elastic ring (42) is mounted on the outer circumference of the stator (20), and protrudes axially, with the supporting points (44), towards the housing (10) beyond the end face of the stator (20) in the relaxed condition in the auxiliary position, and is pressed axially behind the end face of the stator (20), against the action of a spring force, in the mounted position.

8. An encoder according to one of Claims 5 to 7,
**characterised in that** the elastic ring (42) has an undulating design in the circumferential direction, is alternately braced against the stator (20) in the circumferential direction, and is constructed with supporting points (44).

9. An encoder according to one of Claims 5 to 8,
**characterised in that** the elastic ring is made of plastic.

## Revendications

1. Codeur pour saisir des valeurs de mesure dépendant de l'angle de rotation entre un arbre (12) et un boîtier (10) recevant l'arbre (12) et comprenant :
- un stator (20) fixé au boîtier (10),
- un rotor (30) fixé sur l'arbre (12),
- un moyen de détection saisissant la rotation du rotor (30) par rapport au stator (20), et
- des moyens de montage qui tiennent le stator (20) dans une position auxiliaire, à une distance axiale (a) définie par rapport au boîtier (10), cette distance correspondant à la distance axiale du rotor (30) et du stator (20) à l'état monté, distance nécessaire pour permettre une rotation sans contact et de fixer le stator (20) au boîtier (10) dans une position de montage dans laquelle le rotor est à une distance axiale (a) définie par rapport au stator,
**caractérisé en ce que**
les moyens de montage comprennent un organe d'écartement installé sur le codeur pour maintenir le stator (20) à l'état hors contrainte dans la position auxiliaire,
le stator (20) est déplacé, sous déformation de l'organe d'écartement, d'une distance axiale définie (a) dans la position de montage pour être fixé au boîtier (10), et
l'organe d'écartement déformé reste en position de montage lorsque le codeur est monté.

2. Codeur selon la revendication 1,
**caractérisé en ce que**
l'organe d'écartement est une installation à ressort, et
le stator (20) est déplacé dans la position de montage contre la force de ressort exercée par l'installation à ressort.

3. Codeur selon la revendication 2,
**caractérisé en ce que**
l'installation de ressort supporte élastiquement le stator (20) contre le boîtier (10).

4. Codeur selon la revendication 3,
**caractérisé en ce que**
l'installation de ressort comporte au moins un ressort (42) prévu sur le stator (20) et s'appuyant contre le boîtier (10).

5. Codeur selon la revendication 4,
**caractérisé en ce que**
le ressort est un anneau élastique (42) monté concentriquement au stator (20) et il s'appuie contre le boîtier (10) par l'intermédiaire de points d'appui (44) répartis à la périphérie.

6. Codeur selon la revendication 5,
**caractérisé par**
trois points d'appui (44) décalés angulairement de 120°.

7. Codeur selon la revendication 5 ou 6,
**caractérisé en ce que**
l'anneau élastique (42) est installé sur la périphérie du stator (20), et à l'état détendu, dans la position auxiliaire, ses points d'appui (44), dépassent axialement sur le boîtier (10) par rapport à la face frontale du stator (20), et en position de montage, l'anneau est poussé axialement contre la force développée par le ressort derrière la surface frontale du stator (20).

8. Codeur selon les revendications 5 à 7,
**caractérisé en ce que**
l'anneau élastique (42) a une forme ondulée dans la direction périphérique, et s'appuie alternativement contre le stator (20) dans la direction périphérique en ayant des points d'appui (44).

9. Codeur selon les revendications 5 à 8,
**caractérisé en ce que**
l'anneau élastique est en matière plastique.
